# EUROPEAN PATENT SPECIFICATION

(11) **EP 2 760 069 B1**
(45) Date of publication and mention of the grant of the patent: **24.01.2018**
(21) Application number: 12833286.3
(22) Date of filing: 05.09.2012
(51) Int. Cl.: H01M 4/58, H01M 4/36, H01M 4/485, H01M 4/505, H01M 4/525, H01M 4/62, H01M 4/02

(54) **ELECTRODE MATERIAL AND ELECTRODE**
ELEKTRODENMATERIAL UND ELEKTRODE
MATÉRIAU D'ÉLECTRODE ET ÉLECTRODE

(30) Priority: 22.09.2011 JP 2011207832
(43) Date of publication of application: 30.07.2014
(73) Proprietor: Sumitomo Osaka Cement Co., Ltd., Tokyo 102-8465 (JP)
(72) Inventor: KITAGAWA, Takao, Tokyo 102-8465 (JP); UEHARA, Masaru, Tokyo 102-8465 (JP)
(74) Representative: Cabinet Laurent & Charras
(86) International application number: PCT/JP2012/072589
(87) International publication number: WO 2013/042538

(56) References cited:
- EP-A1- 2 654 110
- JP-A- 2007 173 134
- JP-A- 2009 544 563
- JP-A- 2010 218 884
- JP-A- 2011 076 820
- JP-A- 2011 210 649
- US-A1- 2005 247 914
- US-A1- 2006 068 287
- US-A1- 2009 142 668
- US-A1- 2010 279 117
- WANG G J ET AL: "Preparation and characteristic of carbon-coated Li4Ti5O12 anode material", JOURNAL OF POWER SOURCES, ELSEVIER SA, CH, vol. 174, no. 2, 6 December 2007 (2007-12-06), pages 1109-1112, XP002569131, ISSN: 0378-7753, DOI: 10.1016/J.JPOWSOUR.2007.06.107 [retrieved on 2007-06-26]
- FERGUS ET AL: "Recent developments in cathode materials for lithium ion batteries", JOURNAL OF POWER SOURCES, ELSEVIER SA, CH, vol. 195, no. 4, 15 February 2010 (2010-02-15), pages 939-954, XP026693512, ISSN: 0378-7753, DOI: 10.1016/J.JPOWSOUR.2009.08.089 [retrieved on 2009-09-06]
- ZHAOHUI CHEN ET AL: "Reducing Carbon in LiFePO[sub 4]/C Composite Electrodes to Maximize Specific Energy, Volumetric Energy, and Tap Density", JOURNAL OF THE ELECTROCHEMICAL SOCIETY, vol. 149, no. 9, 1 January 2002 (2002-01-01), pages A1184-A1189, XP055238122, ISSN: 0013-4651, DOI: 10.1149/1.1498255

## Description

### Technical Field

The present invention relates to an electrode material, an electrode and a method of manufacturing electrode materials, and particularly to an electrode material preferably used as a battery cathode material, furthermore, a lithium ion battery cathode material, an electrode made by containing the electrode material, and a method of manufacturing the electrode material.

### Background Art

In recent years, as a battery expected to achieve a decrease in size and weight and an increase in capacitance, non-aqueous electrolytic solution-based secondary batteries such as lithium ion batteries have been proposed and put into practical use.

The lithium ion battery is made up of a cathode and an anode, which allow lithium ions to be reversibly entered thereinto and removed therefrom, and a non-aqueous electrolytic solution.

For an anode material of the lithium ion battery, generally, a carbon-based material or a lithium-containing metallic oxide which allows lithium ions to be reversibly entered thereinto and removed therefrom, such as lithium titanate (Li₄Ti₅O₁₂), is used as an anode active material.

On the other hand, for a cathode material of the lithium ion battery, a lithium-containing metallic oxide which allows lithium ions to be reversibly entered thereinto and removed therefrom, such as lithium iron phosphate (LiFePO₄), or an electrode material mixture containing a binder is used as a cathode active material. In addition, when the electrode material mixture is applied to a surface of a metallic foil called a current collector, a cathode of the lithium ion battery is formed.

The lithium ion battery has a lighter weight, a smaller size and a higher energy than secondary batteries of the related art, such as a lead battery, a nickel-cadmium battery and a nickel-hydrogen battery, and is thus used as a power supply for portable electronic devices such as mobile phones and notebook computers. In addition, in recent years, there have been additional studies on lithium ion batteries as a high-output power supply for electrical vehicles, hybrid vehicles, electromotive tools and the like, and batteries being used as the high-output power supply are required to have a high-speed charge and discharge characteristic.

However, an electrode active material, for example, an electrode material containing a lithium-containing metallic oxide or phosphate which allows lithium ions to be reversibly entered thereinto and removed therefrom has a problem of low electron conductivity. Therefore, in order to increase the electron conductivity of an electrode material, an electrode material produced by coating the particle surfaces of an electrode active material with an organic component, which is a carbon source, and then carburizing the organic component so as to form a carbonaceous coat on the surface of the electrode active material, thereby interposing carbon in the carbonaceous coat as an electron conducting substance has been proposed (PTL 1 to 3).

### Citation List

### Patent Literature

[PTL 1] Japanese Laid-open Patent Publication No. 2001-15111
[PTL 2] US2009142668 A1
[PTL 3] US2010279117 A1

### Summary of Invention

### Technical Problem

However, the electron conductivity of an electrode active material is indispensable in order to use the electrode active material as a battery material for lithium ion batteries, and the electron conductivity of the electrode active material is preferably higher.

However, in an electrode material formed by firing an electrode active material formed of an organic compound of the related art supported therein or a precursor of the electrode active material in a non-oxidizing atmosphere, a carbonaceous coat is formed on the surface of the electrode active material due to the condensation of an aromatic carbon compound generated by the thermal decomposition of the organic compound during the firing. Meanwhile, since the aromatic carbon compound is volatile at a high temperature, particularly, at a firing temperature in a range of 500°C to 1000°C, as the concentration of gasified substances in the aromatic carbon compound increases, the amount of the carbonaceous coat being supported increases and the thickness of the coat also increases; on the other hand, as the concentration of the gasified substances decreases, the amount of the carbonaceous coat being supported decreases and the thickness of the coat decreases.

Therefore, in a case in which the electrode active material does not agglomerate to each other in a collection of primary particles of the electrode active material and a case in which an agglomerate is highly porous, there is a problem in that, when firing the electrode active material in a non-oxidizing atmosphere, the concentration of the gasified substances in the aromatic carbon compound decreases, the amount of the carbonaceous coat being supported entirely or partially decreases, the thickness of the carbonaceous coat decreases, and the coating rate of the carbonaceous coat decreases.

The invention has been made to solve the above problem, and an object of the invention is to provide an electrode material that, when an electrode active material having a carbonaceous coat formed on the surface is used as an electrode material, has a small variation in an amount of the carbonaceous coat being supported and, furthermore, can improve the electron conductivity.

### Solution to Problem

As a result of comprehensive studies for solving the above problem, the present inventors and the like found that, when a slurry containing an electrode active material or a precursor of an electrode active material, an organic compound, and a liquid mixture which is contained to disperse the electrode active material or the precursor of the electrode active material and is made up of two or more solvents having different boiling points is dried while manufacturing an electrode material, it is possible to set a volume density of an obtained agglomerate in a range of 50% by volume to 80% by volume of a volume density of a solid form of the agglomerate, to form a mono-modal pore size distribution of pores in the agglomerate, and to set an average pore diameter to 0.3 µm or less in the pore size distribution, whereby a concentration of gasified substances in an aromatic carbon compound in the agglomerate can be increased, and, consequently, an amount of a carbonaceous coat supported on a surface of the electrode active material in the agglomerate varies only slightly.

That is, an electrode material of the invention is made of an agglomerate formed by agglomerating particles of an electrode active material having a carbonaceous coat formed on a surface, in which the average particle diameter of the agglomerate is in a range of 1.0 µm to 100 µm, the volume density of the agglomerate is in a range of 50% by volume to 80% by volume of a volume density of a solid form of the agglomerate, and a pore size distribution of pores in the agglomerate is mono-modal, a normal distribution, and the average pore diameter in the pore size distribution is 0.3 µm or less.

In the electrode material of the invention, 80% or more of surfaces of the particles of the electrode active material are preferably coated with the carbonaceous coat.

The agglomerate is an agglomerate having pores therein, a pore diameter (D90) at a cumulative volume percentage of 90% in the pore diameter distribution of the pores in the agglomerate is preferably 1.0 µm or less, and the ratio (thickness of central portion carbonaceous coat/thickness of outer circumferential portion carbonaceous coat) of an average film thickness of the carbonaceous coat in a central portion of the agglomerate to an average film thickness of the carbonaceous coat in an outer circumferential portion of the agglomerate is in a range of 0.7 to 1.3.

The amount of carbon in the carbonaceous coat is in a range of 0.6 parts by mass to 10 parts by mass with respect to 100 parts by mass of the electrode active material.

The tap density of the agglomerate is in a range of 1.0 g/cm³ to 1.5 g/cm³.

The electrode active material preferably contains as a principle component an element selected from a group consisting of lithium cobaltate, lithium nickelate, lithium manganite, lithium titanate and LiₓA_{y}D_{z}PO₄ (here, A represents one or two or more selected from a group consisting of Co, Mn, Ni, Fe, Cu and Cr; D represents one or two or more selected from a group consisting of Mg, Ca, S, Sr, Ba, Ti, Zn, B, Al, Ga, In, Si, Ge, Sc, Y and rare earth elements; 0<x<2, 0<y<1.5, 0≤z<1.5).

An electrode of the invention contains the electrode material of the invention.

The electrode material of the invention is manufactured as follows:
a slurry containing an electrode active material or a precursor of an electrode active material, an organic compound, and a liquid mixture which is contained to disperse the electrode active material or the precursor of the electrode active material and is made up of two or more solvents having different boiling points is dried, and then an obtained dried substance is fired in a range of 500°C to 1000°C in a non-oxidizing atmosphere. Advantageous Effects of Invention

According to the electrode material of the invention, since the average particle diameter of the agglomerate formed by agglomerating the particles of the electrode active material having the carbonaceous coat formed on the surface is in a range of 1.0 µm to 100 µm, the volume density of the agglomerate is set in a range of 50% by volume to 80% by volume of the volume density of the solid form of the agglomerate, furthermore, the pore size distribution of the pores in the agglomerate is made to be mono-modal, and the average pore diameter in the pore size distribution is set to 0.3 µm or less, it is possible to decrease the variation in the amount of the carbonaceous coat supported on the surfaces of the particles of the electrode active material, whereby it is possible to decrease the variation in the electron conductivity of the electrode active material. Therefore, in a case in which the electrode material of the invention is used for lithium ion batteries, it is possible to decrease the internal resistance.

In addition, when the electrode active substance having a decreased variation in the electron conductivity is used as an electrode material for a lithium ion battery, it becomes possible to make a reaction in relation to the insertion and removal of lithium ions uniformly caused throughout the entire surface of the electrode active material, whereby it is possible to decrease the internal resistance of electrodes in the lithium ion battery.

According to the electrode of the invention, since the electrode material of the invention is contained, it is possible to decrease the internal resistance of the electrode. Therefore, it is possible to provide an electrode having a small internal resistance as a lithium ion battery cathode.

Since a slurry containing an electrode active material or a precursor of an electrode active material, an organic compound, and a liquid mixture which is contained to disperse the electrode active material or the precursor of the electrode active material and is made up of two or more solvents having different boiling points is dried, and then the obtained dried substance is fired in a range of 500°C to 1000°C in a non-oxidizing atmosphere, it is possible to decrease the variation in the amount of the carbonaceous coat being supported on the surfaces of the particles of the electrode active material. Therefore, it is possible to easily manufacture an electrode material that can decrease the variation in the electron conductivity of the particles of the electrode active material.

### Brief Description of Drawing

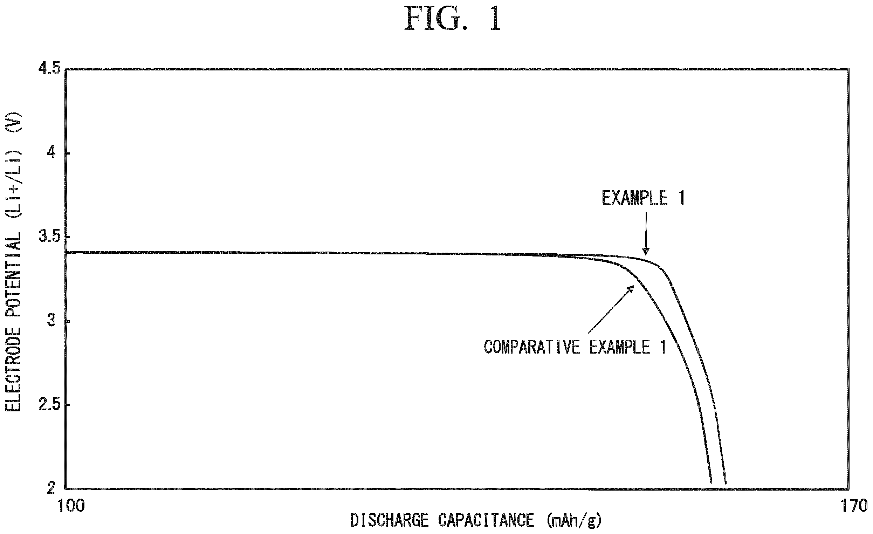

FIG. 1 is a view respectively illustrating charge and discharge characteristics of Example 1 and Comparative Example 1 of the invention at room temperature.

### Description of Embodiments

Embodiments for carrying out the electrode material and the method of manufacturing the electrode material of the invention will be described.

Meanwhile, the embodiments are specific description for better understanding of the purpose of the invention, and the embodiments do not limit the invention unless otherwise particularly described.

### "Electrode material"

An electrode material of the embodiment is made of an agglomerate formed by agglomerating particles of the electrode active material having a carbonaceous coat formed on the surface, the average particle diameter of the agglomerate is in a range of 1.0 µm to 100 µm, the volume density of the agglomerate is in a range of 50% by volume to 80% by volume of the volume density of a solid form of the agglomerate, the pore size distribution of pores in the agglomerate is mono-modal, and the average pore diameter in the pore size distribution is 0.3 µm or less.

Here, the agglomerate formed by agglomerating the particles of the electrode active material having a carbonaceous coat formed on the surface refers to an agglomerate in a state in which the particles of the electrode active material having a carbonaceous coat formed on the surface are agglomerated to each other in a point-contact state and thus are strongly connected to each other with the contact portions between the particles of the electrode active material forming small neck shapes in the cross-section. As such, when the contact portions between the particles of the electrode active material form small neck shapes in the cross-section, a structure in which a three-dimensional channel shape (net shape) of pores spreads in the agglomerate is formed.

In addition, the solid form of the agglomerate refers to a pore-free agglomerate, and the density of the solid agglomerate is considered to be equal to the theoretical density of the electrode active material.

The electrode active material preferably contains as a principle component an element selected from a group consisting of lithium cobaltate, lithium nickelate, lithium manganite, lithium titanate and LiₓA_{y}D_{z}PO₄ (here, A represents one or two or more selected from a group consisting of Co, Mn, Ni, Fe, Cu and Cr; D represents one or two or more selected from a group consisting of Mg, Ca, S, Sr, Ba, Ti, Zn, B, Al, Ga, In, Si, Ge, Sc, Y and rare earth elements; 0<x<2, 0<y<1.5, 0≤z<1.5).

Here, A is preferably Co, Mn, Ni or Fe, and D is preferably Mg, Ca, Sr, Ba, Ti, Zn or Al in terms of a high discharge potential, a rich amount of the resource, safety and the like.

Here, the rare earth elements refer to 15 elements of La, Ce, Pr, Nd, Pm, Sm, Eu, Gd, Tb, Dy, Ho, Er, Tm, Yb and Lu which belong to the lanthanoid series.

In order to make a reaction in relation to the insertion and removal of lithium ions uniformly caused throughout the entire surface of the particles of the electrode active material when the electrode material is used as an electrode material for lithium ion batteries, 80% or more, and, preferably, 90% or more of the surfaces of the particles of the electrode active material are preferably coated with the carbonaceous coat.

The coating rate of the carbonaceous coat can be measured using a transmission electron microscope (TEM) or energy-dispersive X-ray spectroscopy (EDX). Here, when the coating rate of the carbonaceous coat is less than 80%, the coating effect of the carbonaceous coat becomes insufficient, places in which the carbonaceous coat is not formed become highly resistant to the reaction in relation to the insertion and removal of lithium ions when a lithium ion-insertion and removal reaction is caused on the surface of the electrode active material, and the potential significantly drops at the final phase of discharge, which is not preferable.

The amount of carbon in the carbonaceous coat is in a range of 0.6 parts by mass to 10 parts by mass, and preferably in a range of 0.8 parts by mass to 2.5 parts by mass with respect to 100 parts by mass of the electrode active material.

Here, the reasons for limiting the amount of carbon in the carbonaceous coat in the above range are as follows. When the amount of carbon is less than 0.6 parts by mass, the coating rate of the carbonaceous coat does not reach 80%, the discharge capacitance at a high-speed charge and discharge rate becomes low when a battery has been formed, and it becomes difficult to realize a sufficient charge and discharge rate performance. On the other hand, when the amount of carbon exceeds 10 parts by mass, the electrode active material contains a larger amount of carbon than the necessary amount of carbon for forming the carbonaceous coat which is the lower limit necessary to obtain conductivity, and the battery capacitance of a lithium ion battery per unit weight of the electrode active material decreases more than necessary.

The average particle diameter of the agglomerate is in a range of 1.0 µm to 100 µm, and more preferably in a range of 1 µm to 20 µm.

Here, the reasons for setting the average particle diameter of the agglomerate in the above range are as follows: When the average particle diameter is less than 1.0 µm, the agglomerate is so fine as to be easily floatable, and thus it becomes difficult to handle the agglomerate when producing paste to be applied to the electrode. On the other hand, when the average particle diameter exceeds 100 µm, there is a higher probability that there may be agglomerates larger than the film thickness of the dried electrode when producing battery electrodes, and therefore it becomes impossible to maintain the uniformity of the film thickness of the electrode.

The volume density of the agglomerate can be measured using a mercury porosimeter, and is computed using the mass of the entire electrode material made of the agglomerate and the volume of voids among the particles that configure the agglomerate. In other words, the volume density is the density of the agglomerate that is computed using particle voids in the particles of the agglomerate which is obtained by subtracting voids among the particles from the total volume of particle voids that configure the agglomerate and the mass of the entire electrode material made of the agglomerate.

The volume density of the agglomerate is in a range of 50% by volume to 80% by volume, preferably in a range of 55% by volume to 75% by volume, and more preferably in a range of 60% by volume to 75% by volume of the volume density of the solid form of the agglomerate.

As such, when the volume density of the agglomerate is set to 50% by volume or more, the agglomerate becomes more dense so that the strength of the agglomerate increases, the agglomerate is not easily broken when preparing an electrode slurry by, for example, mixing the electrode active material with a binder, a conduction aid and a solvent, consequently, an increase in the viscosity of the electrode slurry is suppressed, and the fluidity is maintained, whereby the coatability becomes favorable, and it is also possible to improve the packing property of the electrode active material in a coat of the electrode slurry.

Here, when the volume density of the agglomerate is outside the above range, for example, less than 50% by volume of the volume density of the solid form of the agglomerate, the concentration of the vapor of the aromatic carbon compound in the pores in the agglomerate of the electrode active material excessively decreases, the film thickness of the carbonaceous coat in the central portion of the agglomerate decreases, and the internal resistance of the electrode active material becomes high, which is not preferable. On the other hand, when the volume density of the agglomerate exceeds 80% by volume of the volume density of the solid form of the agglomerate, the inside density of the agglomerate excessively increases such that the volume of the pores in the channel shape (net shape) in the agglomerate decreases, and, consequently, the agglomerate confines a tar-form substance being generated during the carburization of the organic compound, which is not preferable.

Meanwhile, in a case in which the agglomerate is broken during the production of the electrode slurry, since the necessary amount of a binder that binds the particles of the electrode active material, the viscosity of the electrode slurry increases, the concentration of the solid content of the electrode slurry decreases, and the ratio of the electrode active material to the weight of a cathode film decreases, which is not preferable.

The tap density of the agglomerate is in a range of 1.0 g/cm³ to 1.5 g/cm³.

Here, when the tap density of the agglomerate is less than 1.0 g/cm³, since the amount of the solvent held in the pores in the agglomerate and the voids in the agglomerate when producing the electrode slurry increases, the concentration of the solid content of the electrode slurry decreases, and a time period necessary to dry a coat formed by applying the electrode slurry becomes long, which is not preferable. On the other hand, when the tap density of the agglomerate exceeds 1. 5 g/cm³, the packing property of the agglomerate in a coat formed by applying the electrode slurry becomes too high, and the solvent is not easily volatilized when drying the coat, which is not preferable.

The pore size distribution of the fine pores in the agglomerate can be measured using a mercury porosimeter, and the pore size distribution is mono-modal.

Here, the reason for the pore size distribution being preferably mono-modal is that, when the pore size distribution becomes a normal distribution, the amount of coarse pores in the agglomerate decreases, and, when the volume density of the agglomerate is uniformed, the amount of the aromatic carbon compound gasifying from the inside of the agglomerate is uniformed, whereby the variation in the amount of the carbonaceous coat being supported on the surface of the electrode active material in the agglomerate is decreased.

The pore diameter (D50) at a cumulative volume percentage of 50% in the pore size distribution, that is, the average pore diameter is 0.3 µm or less, and preferably in a range of 0.1 µm to 0.25 µm.

Here, the reason for the average pore diameter of the pores being 0.3 µm or less is that, when the average pore diameter exceeds 0.3 µm, the volume density of the agglomerate does not reach 50% by volume, there is a higher probability that a binder may intrude into the agglomerate when the electrode slurry has been produced, consequently, the amount of the binder that binds agglomerated particles, and the strength of the electrode film decreases.

The pore diameter (D90) at a cumulative volume percentage of 90% in the pore diameter distribution of the pores in the agglomerate is preferably 1.0 µm or less, and more preferably 0.5 µm or less.

Here, the reason for D90 being preferably 1.0 µm or less is that, when D90 in the pore diameter distribution exceeds 1.0 µm, it becomes impossible to maintain the pore diameter distribution being mono-modal, the volume density of the agglomerate becomes uneven due to an increase in the amount of coarse pores in the agglomerate, consequently, the amount of the aromatic carbonaceous compound gasifying from the inside of the agglomerate becomes uneven, and therefore the variation in the amount of the carbonaceous coat being supported on the surface of the electrode active material in the agglomerate is increased.

Furthermore, the ratio (thickness of central portion carbonaceous coat/thickness of outer circumferential portion carbonaceous coat) of the average film thickness of the carbonaceous coat in the central portion of the agglomerate to the average film thickness of the carbonaceous coat in the outer circumferential portion of the agglomerate is in a range of 0.7 to 1.3, and preferably in a range of 0.8 to 1.2.

Here, when the ratio (thickness of central portion carbonaceous coat/thickness of outer circumferential portion carbonaceous coat) of the average film thickness is outside the above range, the thickness of the carbonaceous coat decreases in the outer circumferential portion or the central portion of the agglomerate, and the internal resistance of the electrode active material increases, which is not preferable.

Meanwhile, the "internal resistance" stated herein refers to a place that is highly resistant to the reaction in relation to the insertion and removal of lithium ions in, among the particles of the electrode active material, particles having no carbonaceous coat formed on the surface or particles having a thin carbonaceous coat, and, specifically, when the electrode material is used as an electrode material for lithium ion batteries, the internal resistance appears as voltage drop at the final phase of discharge. That is, in an electrode active material in which the lithium ion-insertion and removal reaction is uniformly caused throughout the entire surface of the particles of the electrode active material, the voltage drop at the final phase of discharge is small, and, in an electrode active material in which the lithium ion-insertion and removal reaction is not easily caused on some of the surfaces of the particles of the electrode active material, a significant voltage drop occurs at the final phase of discharge.

"Method of manufacturing electrode materials"

A method of manufacturing electrode materials of the embodiment is a method in which a slurry containing an electrode active material or a precursor of an electrode active material, an organic compound, and a liquid mixture which is contained to disperse the electrode active material or the precursor of the electrode active material and is made up of two or more solvents having different boiling points is dried, and then an obtained dried substance is fired in a range of 500°C to 1000°C in a non-oxidizing atmosphere.

Here, the liquid mixture made up of two or more solvents having different boiling points is a mixture made up of two or more solvents selected from a group consisting of water (boiling point: 100°C at 1 atmospheric pressure), monovalent alcohols such as methanol (boiling point: 64.1°C at 1 atmospheric pressure), ethanol (boiling point: 78.3°C at 1 atmospheric pressure) and 2-propanol (boiling point: 82.4°C at 1 atmospheric pressure), divalent alcohols such as ethylene glycol (boiling point: 197°C at 1 atmospheric pressure), trivalent alcohols such as glycerin (boiling point: 290°C at 1 atmospheric pressure), sugar alcohols, phenols, cycloalkane, cycloalkene, cycloalkyne, benzene-based aromatic compounds, condensed ring aromatic compounds, benzo condensed ring compounds, heteroaromatic compounds and non-benzene-based aromatic compounds.

Similarly to what has been described for the electrode material, the electrode active material preferably contains as a principle component an element selected from a group consisting of lithium cobaltate, lithium nickelate, lithium manganite, lithium titanate and LiₓA_{y}D_{z}PO₄ (here, A represents one or two or more selected from a group consisting of Co, Mn, Ni, Fe, Cu and Cr; D represents one or two or more selected from a group consisting of Mg, Ca, S, Sr, Ba, Ti, Zn, B, Al, Ga, In, Si, Ge, Sc, Y and rare earth elements; 0<x<2, 0<y<1.5, 0≤z<1.5).

Here, A is preferably Co, Mn, Ni or Fe, and D is preferably Mg, Ca, Sr, Ba, Ti, Zn or Al in terms of a high discharge potential, a rich amount of the resource, safety and the like.

Here, the rare earth elements refer to 15 elements of La, Ce, Pr, Nd, Pm, Sm, Eu, Gd, Tb, Dy, Ho, Er, Tm, Yb and Lu which belong to the lanthanoid series.

As the compound represented by LiₓA_{y}D_{z}PO₄ (LiₓA_{y}D_{z}PO₄ powder), a compound manufactured using a conventional method such as a solid-phase method, a liquid-phase method or a gas-phase method can be used.

As the compound (LiₓA_{y}D_{z}PO₄ powder), for example, a compound (LiₓA_{y}D_{z}PO₄ powder) obtained by hydrothermally synthesizing a slurry-form mixture obtained by mixing a Li source selected from a group consisting of a lithium salt, such as lithium acetate (LiCH₃COO) or lithium chloride (LiCl), or lithium hydroxide (LiOH) ; a divalent iron salt such as iron (II) chloride (FeCl₂), iron (II) acetate (Fe(CH₃COO)₂) or iron (II) sulfate (FeSO₄); a phosphate compound such as phosphoric acid (H₃PO₄), ammonium dihydrogen phosphate (NH₄H₂PO₄) or ammonium hydrogen phosphate ((NH₄)₂HPO₄); and water using a pressure-proof closed container, washing obtained sediment using water so as to produce a cake-form precursor substance, and firing the cake-form precursor substance can be preferably used.

The LiₓA_{y}D_{z}PO₄ powder may be crystalline particles, amorphous particles or mixed crystal particles in which crystalline particles and amorphous particles coexist. Here, the reason for allowing amorphous particles to be used as the LiₓA_{y}D_{z}PO₄ powder is that the amorphous LiₓA_{y}D_{z}PO₄ powder is crystallized when thermally treated in a non-oxidizing atmosphere at a temperature in a range of 500°C to 1000°C.

The size of the electrode active material is not particularly limited, but the average particle diameter of primary particles is preferably in a range of 0.01 µm to 20 µm, and more preferably in a range of 0.02 µm to 5 µm.

Here, the reason for limiting the average particle diameter of the primary particles of the electrode active material is as follows. When the average particle diameter of the primary particles is less than 0.01 um, it becomes difficult to sufficiently coat the surfaces of the primary particles with a carbon thin film, the discharge capacitance at a high-speed charge and discharge rate decreases, and it becomes difficult to realize sufficient charge and discharge rate performance, which is not preferable. On the other hand, when the average particle diameter of the primary particles exceeds 20 µm, the internal resistance of the primary particles increases, and therefore the discharge capacitance at a high-speed charge and discharge rate becomes insufficient, which is not preferable.

The shape of the electrode active material is not particularly limited; however, since an electrode material made of spherical secondary particles, particularly, perfectly spherical secondary particles is easily generated, the shape of the electrode active material is also preferably spherical, particularly, perfectly spherical.

Here, the reason for the shape of the electrode active material preferably being spherical is that it is possible to decrease the amount of a solvent necessary when preparing cathode paste by mixing the electrode active material, a binder resin (binder) and the solvent, and the application of the cathode paste to the agglomerate also becomes easy.

In addition, when the shape of the electrode active material is spherical, the surface area of the electrode active material becomes the minimum, the blending amount of the binder resin (binder) being added to the electrode material compound can be decreased to the minimum, and it is possible to decrease the internal resistance of a cathode to be obtained.

Furthermore, since it is easy to closely pack the electrode active material, the amount of a cathode material being packed in the unit volume increases so that it is possible to increase the electrode density, and, consequently, it is possible to increase the capacitance of lithium ion batteries, which is preferable.

In addition, examples of the organic compound include vinyl such as polyvinyl alcohols, polyvinyl pyrrolidone and polyvinyl acetate; celluloses such as cellulose, carboxymethyl cellulose, methyl cellulose, hydroxymethyl cellulose and hydroxyethyl cellulose; sugars such as glucose, fructose, galactose, mannose, maltose, sucrose and lactose; starch, gelatin, polyacrylic acid, polystyrene sulfonate, polyacrylamide, glycogen, pectin, alginic acid, glucomannan, chitin, hyaluronic acid, chondroitin, agarose, polyethers, divalent alcohols, trivalent alcohols and the like.

The blending ratio of the organic compound to the electrode active material is, when the total amount of the organic compound is converted to the amount of carbon, preferably in a range of 0.6 parts by mass to 10 parts by mass, and more preferably in a range of 0.8 parts by mass to 2.5 parts by mass to 100 parts by mass of the organic compound.

Here, when the blending ratio of the organic compound in an equivalent carbon amount is less than 0.6 parts by mass, the coating rate of the carbonaceous coat does not reach 80%, the discharge capacitance at a high-speed charge and discharge rate decreases when a battery has been formed, and it becomes difficult to realize sufficient charge and discharge rate performance. On the other hand, when the blending ratio of the organic compound in an equivalent carbon amount exceeds 10 parts by mass, the blending ratio of the electrode active material becomes relatively small, the capacitance of a battery decreases when the battery has been formed, the volume of the electrode active material increases due to the carbonaceous coat being excessively supported, therefore, the electrode density decreases, and the battery capacitance of lithium ion batteries per the unit volume drops to an unignorable extent.

The electrode active material and the organic compound are dissolved or dispersed in the liquid mixture made up of two or more solvents having different boiling points, thereby preparing a homogeneous slurry. A dispersant may be added as necessary during the dissolution or dispersion.

A method of dissolving or dispersing the electrode active material and the organic compound in the liquid mixture made up of two or more solvents having different boiling points is not particularly limited as long as the electrode active material is dispersed and the organic compound is dissolved or dispersed, and, for example, use of a medium stirring-type disperser in which medium particles such as a planetary ball mill, an oscillation ball mill, a beads mill, a paint shaker or an Attritor are stirred at a high speed is preferable.

When dissolving or dispersing the electrode active material and the organic compound, it is preferable to disperse the electrode active material in a form of primary particles, and then stir the electrode active material so that the organic compound is dissolved. Then, the surfaces of the primary particles of the electrode active material are coated with the organic compound, and, consequently, in a case in which the electrode active material and the organic compound are fired in a non-oxidizing atmosphere, carbon derived from the organic compound is uniformly interposed among the primary particles of the electrode active material.

In addition, regarding the particle size distribution of the electrode active material or the precursor of the electrode active material in the slurry, it is preferable that the slurry dispersion conditions, for example, the concentrations of the electrode active material and the organic compound in the slurry, the stirring rate and the stirring time be appropriately adjusted so that the ratio (D90/D10) of the average particle diameter (D90) at a cumulative volume percentage of 90% in the pore size distribution to the average particle diameter (D10) at a cumulative volume percentage of 10% in the same pore size distribution of the pores is in a range of 5 to 30. Then, the tap density of an agglomerate obtained by spraying and drying the slurry becomes in a range of 1.0 g/cm³ to 1.5 g/cm³.

Next, the slurry is sprayed and dried in a high-temperature atmosphere, for example, in the atmosphere at a temperature in a range of 70°C to 250°C.

The average particle diameter of liquid droplets during the spraying is preferably in a range of 0.05 µm to 100 µm, and more preferably in a range of 1 µm to 20 µm.

When the average particle diameter of liquid droplets during the spraying is in the above range, a dried substance having an average particle diameter in a range of 1.0 µm to 100 µm and preferably in a range of 1.0 µm to 20 µm can be obtained.

Next, the dried substance is fired in a non-oxidizing atmosphere at a temperature in a range of 500°C to 1000°C and preferably in a range of 600°C to 900°C for 0.1 hours to 40 hours.

The non-oxidizing atmosphere is preferably an inert atmosphere such as nitrogen (N₂) or argon (Ar), and, in a case in which it is necessary to further suppress oxidation, the atmosphere is preferably a reducing atmosphere containing a reducing gas such as hydrogen (N₂). In addition, for the purpose of removing the organic component evaporated in the non-oxidizing atmosphere during the firing, it is also possible to introduce a burnable or combustible gas such as oxygen (O₂) into the inert atmosphere.

In addition, the reason for setting the firing temperature in a range of 500°C to 1000°C is as follows. When the firing temperature is lower than 500°C, since the decomposition and reaction of the organic compound contained in the dried substance does not sufficiently proceed, the organic compound is not sufficiently carbonized, and, consequently, highly resistant organic decomposition products are generated in the obtained agglomerate. On the other hand, when the firing temperature exceeds 1000°C, Li in the electrode active material is evaporated so as to cause a deviation in the composition of the electrode active material and to accelerate the grain growth in the electrode active material, consequently, the discharge capacitance at a high-speed charge and discharge rate decreases, and it becomes difficult to realize sufficient charge and discharge rate performance.

Here, when the conditions of the firing of the dried substance, for example, the temperature-rise rate, the highest holding temperature and the holding time are appropriately adjusted, it is possible to control the grain size distribution of an agglomerate to be obtained.

The above processes coat the surfaces of the primary particles of the electrode active material with carbon generated by the thermal decomposition of the organic compound in the dried substance, thereby obtaining an agglomerate made of secondary particles in which carbon is interposed among the primary particles of the electrode active material.

The agglomerate becomes the electrode material of the embodiment.

### "Electrode"

An electrode of the embodiment is an electrode containing the electrode material of the embodiment.

In order to produce the electrode of the embodiment, paint for forming the electrode or paste for forming the electrode is prepared by mixing the electrode material, a binder made of a binder resin and a solvent. At this time, a conduction aid such as carbon black may be added, if necessary.

Examples of the binder, that is, the binder resin that is preferably used include polytetrafluoroethylene (PTFE), polyvinylidene fluoride (PVdF) resins, fluorine-containing rubber and the like.

The blending ratio of the binder resin to the electrode material is not particularly limited, and, for example, the binder resin is set in a range of 1 part by mass to 30 parts by mass, and preferably in a range of 3 parts by mass to 20 parts by mass with respect to 100 parts by mass of the electrode material.

Examples of the solvent being used for the paint for forming the electrode or the paste for forming the electrode include water, alcohols such as methanol, ethanol, 1-propanol, 2-propanol (isopropyl alcohol: IPA), butanol, pentanol, hexanol, octanol and diacetone alcohol, esters such as ethyl acetate, butyl acetate, ethyl lactate, propylene glycol monomethyl ether acetate, propylene glycol monoethyl ether acetate and γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether and diethylene glycol monoethyl ether, ketones such as acetone, methyl ethyl ketone (MEK), methyl isobutyl ketone (MIBK), acetyl acetone and cyclohexanone, amides such as dimethylformamide, N,N-dimethyl acetoacetamide and N-methyl pyrrolidone, glycols such as ethylene glycol, diethylene glycol and propylene glycol, and the like. The solvent may be solely used, or two or more solvents may be used in a mixture form.

Next, the paint for forming the electrode or the paste for forming the electrode is applied to a surface of a metal foil, and then dried, thereby obtaining a metallic foil having a coat made of a mixture of the electrode material and the binder resin formed on a surface.

Next, the coat is pressed by applying a pressure, and dried, thereby producing a collector (electrode) having an electrode material layer on a surface of the metallic foil.

The electrode of the embodiment can be produced in the above manner.

A lithium ion battery can be obtained by using the collector (electrode) as a cathode.

In the lithium ion battery, the internal resistance of the collector (electrode) can be decreased by producing the collector (electrode) using the electrode material of the embodiment. Therefore, it is possible to provide the collector (electrode) having a small internal resistance as a cathode of a lithium ion battery.

According to the electrode material of the embodiment, since the average particle diameter of the agglomerate formed by agglomerating the particles of the electrode active material having the carbonaceous coat formed on the surface is in a range of 1.0 µm to 100 µm, the volume density of the agglomerate is set in a range of 50% by volume to 80% by volume of the volume density of the solid form of the agglomerate, furthermore, the pore size distribution of the pores in the agglomerate is made to be mono-modal, and the average pore diameter in the pore size distribution is set to 0.3 µm or less, it is possible to decrease the variation in the amount of the carbonaceous coat supported on the surfaces of the particles of the electrode active material, whereby it is possible to decrease the variation in the electron conductivity of the electrode active material. Therefore, in a case in which the electrode material of the invention is used for lithium ion batteries, it is possible to decrease the internal resistance.

According to the method of manufacturing electrode materials of the invention, when a slurry containing an electrode active material or a precursor of an electrode active material, an organic compound, and a liquid mixture which is contained to disperse the electrode active material or the precursor of the electrode active material and is made up of two or more solvents having different boiling points is dried, since the two or more solvents contained in the slurry have different evaporation rates, the solvents are selectively evaporated depending on the boiling point (a solvent having a lower boiling point is first evaporated), and, accordingly, the fluidity of the slurry made up of the remaining solvents having a high boiling point is significantly decreased, whereby it is possible to obtain a mono-modal pore size distribution of pores in a granular agglomerate obtained by drying the slurry, and to set the average pore diameter in the agglomerate to 0.3 µm or less.

In addition, since the obtained dried substance is fired in a non-oxidizing atmosphere at a temperature in a range of 500°C to 1000°C, it is possible to decrease the variation in the amount of the carbonaceous coat formed on the surfaces of the particles of the electrode active material, and an electrode material that can decrease the variation in the electron conductivity of the electrode active material can be easily manufactured.

According to the electrode of the embodiment, since the electrode material of the embodiment is contained, it is possible to decrease the internal resistance of the electrode. Therefore, it is possible to provide a collector (cathode) having a small internal resistance by using an electrode having a small internal resistance as a lithium ion battery collector (cathode).

### EXAMPLES

Hereinafter, the invention will be specifically described using Examples 1 to 6 and Comparative Examples 1 to 3, but the invention is not limited to the examples.

For example, in the present examples, in order to reflect the behaviors of an electrode material in the data, metallic Li was used as an anode, but an anode material such as a carbon material, a Li alloy or Li₄Ti₅O₁₂ may be used. In addition, a solid electrolyte may be used instead of an electrolytic solution and a separator.

### "Example 1"

### (Production of an electrode material)

Lithium acetate (LiCH₃COO, 4mol), iron (II) sulfate (FeSO₄, 2 mol) and phosphoric acid (H₃PO₄, 2 mol) were mixed with water (2 liters) so as to obtain a total amount of 4 L, thereby preparing a homogeneous slurry-form mixture.

Next, the mixture was accommodated in an 8 L pressure-proof closed container, and hydrothermally synthesized at 120°C for one hour.

Next, obtained sediment was washed using water, thereby obtaining a cake-form precursor of an electrode active material.

Next, the precursor of the electrode active material (150 g in an equivalent solid content amount), an aqueous solution of polyvinyl alcohol obtained by dissolving polyvinyl alcohol (PVA, 20 g) as the organic compound in water (100 g), methanol (50 g), glycerin (50 g) and zirconia balls (500 g) having a diameter of 5 mm as medium particles were put into a ball mill, the stirring time of the ball mill was adjusted so that D90/D10 of the particle size distribution of the particles of the precursor of the electrode active material in the slurry became 7, and a dispersion treatment was carried out.

Next, the obtained slurry was sprayed into the atmosphere at 180°C, and dried, thereby obtaining a dried substance having an average particle diameter of 6 µm.

Next, the obtained dried substance was fired at 700°C in a nitrogen atmosphere for one hour, thereby obtaining an agglomerate having an average particle diameter of 6 µm, and the agglomerate was used as an electrode material of Example 1.

### (Evaluation of the electrode material)

The pore diameter distribution (average pore diameter D50 and pore diameter D90 at a cumulative volume percentage of 90%) of the electrode material, the ratio (thickness of central portion carbonaceous coat/thickness of outer circumferential portion carbonaceous coat) of the average film thickness of the carbonaceous coat, the volume density of the agglomerate, the coating rate of the carbonaceous coat, the tap density and the average primary particle diameter were evaluated respectively.

The evaluation methods as described below are used.
(1) The average pore diameter (D50) in the agglomerate
   It was measured using a mercury porosimeter.
(2) D90 in the pore diameter distribution in the agglomerate
   It was measured using a mercury porosimeter.
(3) The ratio of the average film thickness of the carbonaceous coat
   The carbonaceous coat of the agglomerate was observed using a transmission electron microscope (TEM), the thicknesses of 100 carbonaceous coats on different particles in the central portion of the agglomerate were measured, the average value was computed, the thicknesses of 100 carbonaceous coats on different particles in the outer circumferential portion were measured, the average value was computed, and the ratio of the average film thickness of the carbonaceous coat (thickness of central portion carbonaceous coat/thickness of outer circumferential portion carbonaceous coat) was computed using the average values.
(4) The volume density of the agglomerate
   It was measured using a mercury porosimeter.
(5) The coating rate of the carbonaceous coat
   The carbonaceous coat of the agglomerate was observed using a transmission electron microscope (TEM) and energy-dispersive X-ray spectroscopy (EDX), the proportion of portions coated with the carbonaceous coat in the surface of the agglomerate was computed, and used as the coating rate.
(6) The tap density was measured based on Japanese Industrial Standard JIS R 1628 "Test methods for bulk density of fine ceramic powder".
(7) Average primary particle diameter
   The primary particles of the agglomerate were observed using a scanning electron microscope (SEM), the long diameters of 1000 primary particles in an obtained image were measured respectively, and the average value of the measured values was used as the average primary particle diameter.

The evaluation results are described in Tables 1 and 2.

### (Production of a lithium ion battery)

The electrode material, polyvinylidenefluoride (PVdF) as a binder, and acetylene black (AB) as a conduction aid were mixed so that the mass ratio became 90:5:5, and, furthermore, N-methyl-2-pyrrolidone (NMP) was added as a solvent so as to provide fluidity, thereby producing a slurry.

Next, the slurry was applied to a 15 µm-thick aluminum (Al) foil, and dried. After that, the dried slurry was pressed using a pressure of 600 kgf/cm², thereby producing a cathode for a lithium ion battery of Example 1.

A lithium metal was disposed as an anode with respect to the cathodes of the lithium ion battery, and a separator made of porous polypropylene was disposed between the cathodes and the anode, thereby producing a member for the battery.

Meanwhile, an electrolytic solution having lithium ion conductivity was produced by mixing ethylene carbonate and diethyl carbonate at 1:1 (mass ratio) and, furthermore, adding a 1 M LiPF₆ solution.

Next, the member for the battery was immersed in the electrolytic solution, thereby producing the lithium ion battery of Example 1.

### (Evaluation of the lithium ion battery)

The internal resistance and the charge and discharge characteristics of the lithium ion battery were evaluated respectively.

The evaluation methods as described below are used.

### (1) Charge and discharge characteristics

A charge and discharge test of the lithium ion battery was carried out at room temperature (25°C) with a cut-off voltage in a range of 2 V to 4.5 V and a constant current at a charge and discharge rate of 1 C (one-hour charge and then one-hour discharge).

The charge and discharge characteristics are illustrated in Fig. 1, and the initial discharge capacitances are described in Table 2, respectively.

### (2) Internal resistance

In the discharge curve illustrated in Fig. 1, a voltage drop observed at the final phase of discharge indicates the presence of the electrode active material not coated with the carbonaceous coat. Specimens in which a significant voltage drop was observed were determined to have a high internal resistance.

Here, specimens in which no or small voltage drop was observed were evaluated as "O", and specimens in which a significant voltage drop was observed were evaluated as "X".

The evaluation results are described in Table 2.

### "Example 2"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (100 g), methanol (20 g) and glycerin (80 g) was used as a raw material for the slurry being sprayed and dried, and the electrode material and the lithium ion battery cathode were evaluated. The evaluation results are described in Tables 1 and 2.

Meanwhile, in Example 2 as well, similarly to Example 1, a voltage drop at the final phase of discharge was observed.

### "Example 3"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (100 g), methanol (80 g) and glycerin (20 g) was used as a raw material for the slurry being sprayed and dried, and the electrode material and the lithium ion battery cathode were evaluated. The evaluation results are described in Tables 1 and 2.

Meanwhile, in Example 3 as well, similarly to Example 1, a voltage drop at the final phase of discharge was observed.

### "Example 4"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (180 g), methanol (10 g) and glycerin (10 g) was used as a raw material for the slurry being sprayed and dried, and the electrode material and the lithium ion battery cathode were evaluated. The evaluation results are described in Tables 1 and 2.

Meanwhile, in Example 4 as well, similarly to Example 1, a voltage drop at the final phase of discharge was observed.

### "Example 5"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving methyl cellulose (MC, 20 g) as the organic compound in water (100 g), methanol (50 g) and glycerin (50 g) was used as a raw material for the slurry being sprayed and dried, and the electrode material and the lithium ion battery cathode were evaluated. The evaluation results are described in Tables 1 and 2.

Meanwhile, in Example 5 as well, similarly to Example 1, a voltage drop at the final phase of discharge was observed.

### "Example 6"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (100 g), methanol (50 g) and glycerin (50 g) was used as a raw material for the slurry being sprayed and dried, and the electrode material and the lithium ion battery cathode were evaluated. The evaluation results are described in Tables 1 and 2.

Meanwhile, in Example 6 as well, similarly to Example 1, a voltage drop at the final phase of discharge was observed.

### "Comparative Example 1"

An electrode material and a lithium ion battery cathode were produced in the same manner as in Example 1 except that the precursor of the electrode active material (150 g in an equivalent solid content amount) and an aqueous solution of polyvinyl alcohol obtained by dissolving polyvinyl alcohol (PVA, 20 g) as the organic compound in water (200 g) were used as a raw material for the slurry being sprayed and dried, and the electrode material and the lithium ion battery cathode were evaluated. The evaluation results are described in Tables 1 and 2, and the charge and discharge characteristics are illustrated in Fig. 1, respectively.

### "Comparative Example 2"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (190 g), methanol (5 g) and glycerin (5 g) was used as a raw material for the slurry being sprayed and dried, and the electrode material and the lithium ion battery cathode were evaluated.

The evaluation results are described in Tables 1 and 2.

### "Comparative Example 3"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (190 g), methanol (2 g) and glycerin (8 g) was used as a raw material for the slurry being sprayed and dried, and the electrode material and the lithium ion battery cathode were evaluated. The evaluation results are described in Tables 1 and 2.

### "Comparative Example 4"

An electrode material and a lithium ion battery cathode were produced in the same manner as in Example 1 except that a liquid mixture of the precursor of the electrode active material (150 g in an equivalent solid content amount), an aqueous solution of polyvinyl alcohol obtained by dissolving polyvinyl alcohol (PVA, 20 g) as the organic compound in water (190 g), methanol (8 g) and glycerin (2 g) was used as a raw material for the slurry being sprayed and dried, and the electrode material and the lithium ion battery cathode were evaluated. The evaluation results are described in Tables 1 and 2.

**[Table 1]**

| | Dispersion medium of electrode active material or precursor of electrode active material | Organic compound | D90/D10 of electrode active material or precursor of electrode active material in slurry | Amount of carbon (parts by mass) | Pore diameter distribution (µm) | | Ratio of average film thickness of carbonaceous coat |
|---|---|---|---|---|---|---|---|
| | | | | | D50 | D90 | |
| Example 1 | Water:methanol:glycerin=50:25:25 | PVA | 7 | 1.0 | 0.17 | 0.7 | 0.8 |
| Example 2 | Water:methanol:glycerin=50:10:40 | PVA | 7 | 1.7 | 0.17 | 0.7 | 0.9 |
| Example 3 | Water:methanol:glycerin=50:40:10 | PVA | 7 | 2.5 | 0.18 | 0.7 | 1.2 |
| Example 4 | Water:methanol:glycerin=90:5:5 | PVA | 7 | 2.2 | 0.25 | 0.9 | 1.3 |
| Example 5 | Water:methanol:glycerin=50:25:25 | MC | 7 | 4.8 | 0.22 | 0.4 | 1.1 |
| Example 6 | Water:methanol:ethyleneglycol-50:25:25 | PVA | 7 | 2.0 | 0.18 | 0.6 | 1.3 |
| Comparative Example 1 | Water:methanol:glycerin=100:0:0 | PVA | 7 | 0.5 | 0.35 | 1.2 | 0.6 |
| Comparative example 2 | Water:methanol:glycerin=95:2.5:2.5 | PVA | 7 | 0.4 | 0.32 | 1.1 | 1.5 |
| Comparative example 3 | Water:methanol:glycerin=95:1:4 | PVA | 7 | 0.5 | 0.32 | 1.1 | 1.4 |
| Comparative Example 4 | Water:methanol:glycerin=95:4:1 | PVA | -7 | 0.3 | 0.31 | 1.0 | 1.4 |

**[Table 2]**

| | Volume density of agglomerate (%) | Coating rate of carbonaceous coat (%) | Tap density (g/cm³) | Initial discharge capacitance (mAh/G) | Internal resistance | Average primary particle diameter (nm) |
|---|---|---|---|---|---|---|
| Example 1 | 60 | 95 | 1.1 | 158 | ○ | 221 |
| Example 2 | 65 | 95 | 1.2 | 159 | ○ | 287 |
| Example 3 | 62 | 95 | 1.4 | 159 | ○ | 262 |
| Example 4 | 55 | 91 | 1.3 | 158 | ○ | 320 |
| Example 5 | 63 | 92 | 1.4 | 159 | ○ | 383 |
| Example 6 | 61 | 94 | 1.4 | 160 | ○ | 354 |
| Comparative Example 1 | 47 | 84 | 0.9 | 158 | X | 307 |
| Comparative example 2 | 48 | 84 | 0.9 | 160 | X | 208 |
| Comparative example 3 | 48 | 83 | 0.8 | 159 | X | 303 |
| Comparative Example 4 | 49 | 84 | 0.8 | 157 | X | 200 |

According to the above results, it was found that the electrode materials of Examples 1 to 6 had a ratio of the average film thickness of the carbonaceous coat in a range of 0.7 to 1.3, had a higher tap density and a higher coating rate of the carbonaceous coat than the electrode materials of Comparative Examples 1 to 4, and had a small variation in the amount of the carbonaceous coat being supported formed on the surface of the electrode active material. In addition, it was found that the electrode materials of Examples 1 to 6 had a lower internal resistance than the electrode material of Comparative Examples 1 to 4, and, in a case in which the electrode materials are used as an electrode material for lithium ion batteries, it is possible to decrease the internal resistance.

In addition, according to Fig. 1, it was found that the electrode material of Example 1 had a higher discharge capacitance and better discharge characteristics than the electrode material of Comparative Example 1.

### Industrial Applicability

When the average particle diameter of the agglomerate formed by agglomerating the particles of the electrode active material having the carbonaceous coat on the surface is in a range of 1.0 µm to 100 µm, the volume density of the agglomerate is in a range of 50% by volume to 80% by volume of the volume density of a solid form of the agglomerate; furthermore, the pore size distribution of pores in the agglomerate is set to be mono-modal, and the average pore diameter in the pore size distribution is set to 0.3 µm or less, the electrode material of the invention can decrease the variation in the amount of the carbonaceous coat being supported formed on the surfaces of the particles of the electrode active material, whereby the variation in the electron conductivity of the electrode active material can be decreased. Furthermore, in a case in which the electrode material of the invention is used as an electrode material for lithium ion batteries, it is possible to decrease the internal resistance, and therefore the electrode material of the invention can further improve the discharge characteristics of lithium ion batteries, the electrode material of the invention can be applied to next-generation secondary batteries which are expected to achieve a decrease in size and weight and an increase in capacitance, and the electrode material of the invention exhibits significantly large effects in the case of next-generation secondary batteries.

## Claims

1. An electrode material made of an agglomerate formed by agglomerating particles of an electrode active material having a carbonaceous coat formed on a surface, wherein an average pore diameter in the pore size distribution is 0.3 µm or less,
a ratio (thickness of central portion carbonaceous coat/thickness of outer circumferential portion carbonaceous coat) of an average film thickness of the carbonaceous coat in a central portion of the agglomerate to an average film thickness of the carbonaceous coat in an outer circumferential portion of the agglomerate is in a range of 0.7 to 1.3,
an average particle diameter of the agglomerate is in a range of 1.0 µm to 100 µm, **characterised in that**
a volume density of the agglomerate is in a range of 50% by volume to 80% by volume of a volume density of a solid form of the agglomerate,
a pore size distribution of pores in the agglomerate is a normal distribution, an amount of carbon in the carbonaceous coat is in a range of 0.6 parts by mass to 10 parts by mass with respect to 100 parts by mass of the electrode active material,
a tap density of the agglomerate is in a range of 1.0 g/cm³ to 1.5 g/cm³, and
wherein the electrode material is manufactured as follows:
a slurry containing an electrode active material or a precursor of an electrode active material, an organic compound for forming a carbonaceous coat, and a liquid mixture which is contained to disperse the electrode active material or the precursor of the electrode active material and is made up of two or more solvents having different boiling points is dried, and
then an obtained dried substance is fired in a range of 500°C to 1000°C in a non-oxidizing atmosphere.

2. The electrode material according to Claim 1,
wherein 80% or more of surfaces of the particles of the electrode active material are coated with the carbonaceous coat.

3. The electrode material according to Claim 1 or 2,
wherein the agglomerate is an agglomerate having pores therein, a pore diameter (D90) at a cumulative volume percentage of 90% in the pore diameter distribution of the pores in the agglomerate is 1.0 µm or less.

4. The electrode material according to Claim 1 or 2,
wherein the electrode active material contains as a principle component an element selected from a group consisting of lithium cobaltate, lithium nickelate, lithium manganite, lithium titanate and LiₓA_{y}D_{z}PO₄ (here, A represents one or two or more selected from a group consisting of Co, Mn, Ni, Fe, Cu and Cr; D represents one or two or more selected from a group consisting of Mg, Ca, S, Sr, Ba, Ti, Zn, B, Al, Ga, In, Si, Ge, Sc, Y and rare earth elements; 0<x<2, 0<y<1.5, 0≤z<1.5).

5. An electrode comprising the electrode material according to Claim 1 or 2.

## Patentansprüche

1. Ein Elektrodenmaterial, die aus einem Agglomerat durch Zusammenballen von Teilchen aus elektrodenaktivem Material mit einem auf seiner Oberfläche gebildeten kohlenstoffhaltigen Film besteht,
wobei der durchschnittliche Porendurchmesser der Verteilung der Porengröße 3,0 µm oder kleiner ist,
das Verhältnis (Dicke des zentralen kohlenstoffhaltigen Films/ Dicke des kohlenstoffhaltigen Films der äußeren Umfangsfläche) einer durchschnittlichen Filmdicke des kohlenstoffhaltigen Films in einem zentralen Teil des Agglomerats zu einer durchschnittlichen Filmdicke der äußeren Umfangsfläche des Agglomerats in einem Bereich von 0,7 zu 1,3 liegt,
der durchschnittliche Teilchendurchmesser des Agglomerats in einem Bereich von 1,0 µm bis 100 µm liegt,
**dadurch gekennzeichnet, dass**
die Volumendichte des Agglomerats im Bereich von 50 Vol.-% bis 80 Vol.-% der Volumendichte der festen Form des Agglomerats liegt,
die Porengrößenverteilung der Poren im Agglomerat der normalen Verteilung entspricht,
die Kohlenstoffmenge im kohlenstoffhaltigen Film im Bereich von 0,6 Masseteilchen bis 10 Masseteilchen bezogen auf 100 Masseteilchen des elektrodenaktiven Materials liegt,
die Klopfdichte des Agglomerats im Bereich 1,0 g/cm³ bis 1,5 g/cm³ liegt, und wobei das Elektrodenmaterial wie folgt hergestellt wird:
eine Aufschlämmung, die ein elektrodenaktives Material oder einen Vorgänger eines elektrodenaktiven Materials eine organische Verbindung zur Bildung eines kohlenstoffhaltigen Films sowie eine flüssige Mischung enthält, wobei letztere dazu dient, das elektrodenaktive Material oder den Vorgänger des elektrodenaktiven Materials zu dispergieren und die aus zwei oder mehr Lösungsmitteln mit verschiedenen Siedepunkten besteht, wird getrocknet und dann wird die erhaltene Substanz in einem Bereich von 500°C bis 1.000°C in einer nicht-oxidierenden Atmosphäre gebrannt.

2. Elektrodenmaterial gemäß Anspruch 1, wobei 80 % oder mehr der Teilchenoberflächen des elektrodenaktiven Materials mit einem kohlenstoffhaltigen Film beschichtet sind.

3. Elektrodenmaterial gemäß Anspruch 1 oder 2, wobei es sich bei dem Agglomerat um ein Agglomerat mit Poren handelt, wobei ein Porendurchmesser (D90) bei einem kumulativen Volumenanteil von 90 % in der Porendurchmesserverteilung der Poren im Agglomerat bei 1,0 µm oder weniger liegt.

4. Elektrodenmaterial gemäß Anspruch 1 oder 2, wobei das elektrodenaktive Material als wichtigste Komponente ein Element enthält, das aus Lithiumkobaltat, Lithiumnickelat, Lithiummanganit, Lithiumtitanat und LiₓA_{y}D_{z}P0₄ besteht (hier steht A für eins oder zwei oder mehrere, die aus einer Gruppe ausgewählt werden, die aus Co, Mn, Ni, Fe, Cu und Cr besteht; D steht für eins oder zwei oder mehrere, die aus einer Gruppe ausgewählt werden, die aus Mg, Ca, S, Sr, Ba, Ti, Zn, B, Al, Ga, In, Si, Ge, Sc, Y und seltenen Erde-Elementen besteht; 0<x<2, 0<y<1,5, 0<z<1,5).

5. Elektrode, die das Elektrodenmaterial gemäß einem der Ansprüche 1 oder 2 enthält.

## Revendications

1. Matériau d'électrode composé d'un agglomérat formé par l'agglomération de particules d'un matériau actif d'électrode ayant un revêtement carboné formé sur une surface,
dans lequel un diamètre de pore moyen dans la répartition de taille de pore est de 0,3 µm ou moins,
un rapport (épaisseur de revêtement carboné dans la partie centrale/épaisseur de revêtement carboné dans la partie circonférentielle extérieure) d'une épaisseur de film moyenne du revêtement carboné dans une partie centrale de l'agglomérat sur une épaisseur de film moyenne du revêtement carboné dans une partie circonférentielle extérieure de l'agglomérat se trouve dans une plage de 0,7 à 1,3, un diamètre de particule moyen de l'agglomérat se trouve dans une plage de 1,0 µm à 100 µm,
**caractérisé en ce que**
une densité volumique de l'agglomérat se trouve dans une plage de 50 % en volume à 80 % en volume d'une densité volumique d'une forme solide de l'agglomérat,
une répartition de taille de pore de pores dans l'agglomérat est une répartition normale,
une quantité de carbone dans le revêtement carboné se trouve dans une plage de 0,6 part en masse à 10 parts en masse par rapport à 100 parts en masse du matériau actif d'électrode,
une densité après tassement de l'agglomérat se trouve dans une plage de 1,0 g/cm³ à 1,5 g/cm³, et
dans lequel le matériau d'électrode est fabriqué comme suit :
une pâte contenant un matériau actif d'électrode ou un précurseur d'un matériau actif d'électrode, un composé organique pour former un revêtement carboné et un mélange liquide qui est contenu pour disperser le matériau actif ou le précurseur du matériau d'électrode actif et est composé de deux, ou plus, solvants ayant des points d'ébullition différents est séchée, et
ensuite une substance séchée obtenue est chauffée dans une plage de 500 °C à 1 000 °C dans une atmosphère non oxydante.

2. Matériau d'électrode selon la revendication 1,
dans lequel 80 % ou plus de surfaces des particules du matériau actif d'électrode sont revêtues avec le revêtement carboné.

3. Matériau d'électrode selon la revendication 1 ou 2,
dans lequel l'agglomérat est un agglomérat renfermant des pores, un diamètre de pore (D90) à un pourcentage de volume cumulé de 90 % de la répartition de diamètre de pore des pores dans l'agglomérat est de 1,0 µm ou moins.

4. Matériau d'électrode selon la revendication 1 ou 2,
dans lequel le matériau actif d'électrode contient, comme composant principal, un élément sélectionné dans un groupe constitué de cobaltate de lithium, de nickelate de lithium, de manganite de lithium, de titanate de lithium et de LiₓA_{y}D_{z}PO₄ (ici, A représente un ou deux ou plus éléments sélectionnés dans un groupe constitué de Co, Mn, Ni, Fe, Cu et Cr ; D représente un ou deux ou plusieurs éléments sélectionnés dans un groupe constitué de Mg, Ca, S, Sr, Ba, Ti, Zn, B, Al, Ga, In, Si, Ge, Sc, Y et d'éléments de terres rares ; 0<x<2, 0<y<1,5, 0≤z<1,5).

5. Électrode comprenant le matériau d'électrode selon la revendication 1 ou 2.
